# EUROPEAN PATENT SPECIFICATION

(11) **EP 2 249 125 B1**
(45) Date of publication and mention of the grant of the patent: **07.06.2017**
(21) Application number: 08720282.6
(22) Date of filing: 27.02.2008
(51) Int. Cl.: G01C 21/00, G09B 29/00

(54) **MAP DRAWING DEVICE**
KARTENZEICHENEINRICHTUNG
DISPOSITIF DE TRACAGE DE CARTE

(43) Date of publication of application: 10.11.2010
(73) Proprietor: Mitsubishi Electric Corporation, Chiyoda-ku Tokyo 100-8310 (JP)
(72) Inventor: NOGUCHI, Mototsugu, Tokyo 100-8310 (JP); OTSURU, Makoto, Tokyo 100-8310 (JP)
(74) Representative: Pfenning, Meinig & Partner mbB
(86) International application number: PCT/JP2008/000368
(87) International publication number: WO 2009/107167

(56) References cited:
- EP-A1- 1 134 674
- EP-A1- 1 852 680
- JP-A- 2002 357 441

## Description

### Field of the Invention

The present invention relates to a map drawing device for use in a vehicle-mounted navigation system and so on.

### Background of the Invention

A vehicle-mounted navigation system displays a map and route guide information on a display screen, thereby supporting a user's comfortable driving. Map data handled in the navigation system are created for each of rectangular regions (these regions are referred to as parcels from here on) into which a map is divided, the rectangular regions having an equal length along each of the longitude and latitude directions. For example, the navigation system stores a map file which is digital data into which each of the parcels is converted in a storage unit thereof, and a map drawing device reads the map file from this storage unit to create map data.

A conventional technology for managing a map file efficiently is disclosed by, for example, patent reference 1. In the invention disclosed in patent reference 1, a map file in which a road network included in each parcel is expressed as node records and link records is handled. Furthermore, information about a non-adjacent node showing an intersection on the road network or information about an adjacent node defining a road connection relation between adjacent parcels can be recorded into each node record.

A terminal device disclosed by patent reference 1 determines coordinate information which each of adjacent nodes of adjacent parcels has by using the node records and the link records included in the map file. After that, the above-mentioned terminal device follows a connection from a road in one of the parcels to a road in the other parcel on the basis of the determined coordinate information of each of the adjacent nodes so as to create route data.

[Patent reference 1] JP,2002-99207,A

As mentioned above, map data are created for each of parcels while route data handled by the vehicle-mounted navigation system are created regardless of the parcels. Therefore, in a case in which the route shown by the route data extends over a plurality of parcels, there is a possibility that a route connection cannot be guaranteed between adjacent parcels, and the route cannot be drawn appropriately.

In the conventional technology described in patent reference 1, in order to appropriately draw a route extending over a plurality of parcels, when drawing the route, the coordinates of a sequence of points which construct data for drawing the route are followed in order and the route connection is then checked. A problem is therefore that the load of the drawing process becomes large.

The present invention is made in order to solve the above-mentioned problem, and it is therefore an object of the present invention to provide a map drawing device that can reduce the load of a process of drawing a route extending over a plurality of parcels and that can improve its drawing speed.

### Description of the Invention

A map drawing device in accordance with the present invention includes: a map data storage unit for storing road data defining a sequence of points showing a road with coordinates in each of a plurality of areas into which a map is divided; a link data creating unit for creating link data defining a link sequence connected between two points by using links each showing a path length and an attribute of a road; a drawing data creating unit for, on the basis of road data about each of roads in each area corresponding to a link of the link data, determining whether or not there is a connection between the sequences of points respectively showing the roads, and for, when being able to define sequences of points which are connected to each other in this link, creating data for link drawing, otherwise, creating data for link drawing different from the data for link drawing on the basis of road data about roads in each of areas different from the above-mentioned each area, the road data corresponding to the road data about each of the roads in the above-mentioned each area; a drawing data storage unit for storing the data for link drawing; and a drawing processing unit for, when drawing a map for each of the plurality of areas, drawing the roads corresponding to the link on the map on the basis of the data for link drawing read from the drawing data storage unit.

The map drawing device in accordance with the present invention includes the road data defining a sequence of points showing each road with coordinates in each of the plurality of areas into which the map is divided and the link data defining a link sequence connected between two points by using links each showing a path length and an attribute of a road, determines whether or not there is a connection between sequences of points respectively showing roads on the basis of road data about each of roads in each area corresponding to a link of the link data, when being able to define sequences of points which are connected to each other in this link, creates data for link drawing, otherwise, creates data for link drawing different from the data for link drawing on the basis of road data about roads in each of areas different from the above-mentioned each area, the road data corresponding to the road data about each of the roads in the above-mentioned each area, and also draws the roads corresponding to the link on the map on the basis of this data for link drawing. Because the map drawing device is configured in this way, the map drawing device has an advantage of being able to draw roads corresponding to a link even if the link shows a route extending over two or more of the plurality of parcels into which the map is divided. Furthermore, because the map drawing device can draw roads corresponding to a link by carrying out the simple drawing process using the data for link drawing defining all the sequences of coordinate points connected to each other in the link, the load required to carry out the drawing process can be reduced and an improvement in the drawing speed can be provided.

### Brief Description of the Figures

[Fig. 1] Fig. 1 is a block diagram showing the structure of a map drawing device in accordance with Embodiment 1 of the present invention;
[Fig. 2] Fig. 2 is a flow chart showing a flow of the operation of the map drawing device shown in Fig. 1;
[Fig. 3] Fig. 3 is a view showing an example of route data; [Fig. 4] Fig. 4 is a view showing an example of road data corresponding to the route data;
[Fig. 5] Fig. 5 is a view for explaining a malfunction occurring when whether or not a connection between sequences of coordinate points which construct a route is not determined;
[Fig. 6] Fig. 6 is a flow chart showing a flow of a process of creating route drawing data in accordance with Embodiment 1; and
[Fig. 7] Fig. 7 is a view showing an example of the route drawing data in accordance with Embodiment 1.

### Preferred Embodiments of the Invention

Hereafter, in order to explain this invention in greater detail, the preferred embodiments of the present invention will be described with reference to the accompanying drawings. Embodiment 1.

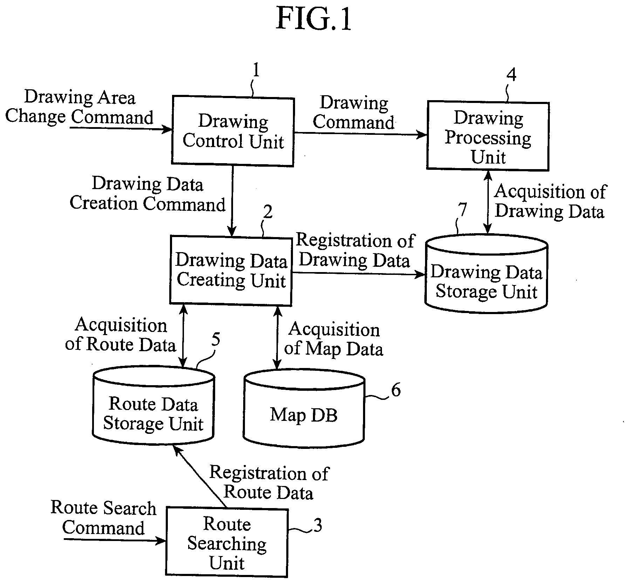

Fig. 1 is a block diagram showing the structure of a map drawing device in accordance with Embodiment 1 of the present invention. In Fig. 1, the map drawing device in accordance with Embodiment 1 is provided with a drawing control unit 1, a drawing data creating unit 2, a route searching unit (a link data creating unit) 3, a drawing processing unit 4, a route data storage unit 5, a map database (DB) (a map data storage unit) 6, and a drawing data storage unit 7.

When receiving a drawing area change command which is produced on the basis of information about a map display which is inputted from a user via a not-shown input unit, the drawing control unit 1 creates a drawing data creation command for carrying out drawing according to this drawing area change command, transmits the drawing data creation command to the drawing data creating unit 2, and controls creation of drawing data by the drawing data creating unit 2. Furthermore, the drawing control unit 1 transmits a drawing command to the drawing processing unit 4 so as to control the drawing processing unit 4 to carry out a drawing process by using the drawing data according to this drawing command.

The drawing area change command is a command for specifying a drawing area for which the drawing data creating unit 2 creates drawing data. For example, when there occurs a change in a map to be displayed through the user's input, the map data corresponding to the drawing area which has been changed as specified by the drawing area change command are read from the map DB 6. In this invention, the map data are data which construct the map to be drawn, and consist of road data defining roads on the map, background data defining the background of the map, symbol data defining points, such as landmarks on the map, and so on.

The drawing data creation command is a command for creating drawing data about the drawing area specified by the drawing area change command, and includes, for example, information specifying parcels corresponding to the above-mentioned drawing area. In this case, the drawing data are data used when drawing the map to be displayed, and include data about a sequence of coordinate points of each road to be drawn, data about coordinates at which each symbol is displayed, data showing the type of each symbol, and so on. Furthermore, the drawing command is a command for specifying the drawing data of the map to be displayed on the display screen of a not-shown display unit.

The drawing data creating unit 2 acquires the route data corresponding to the drawing area specified by the drawing data creation command outputted from the drawing control unit 1 from the route data storage unit 5 and also acquires the map data about the above-mentioned drawing area specified from the map DB 6 so as to create drawing data in which the above-mentioned route data are associated with the above-mentioned map data. The created drawing data are registered into the drawing data storage unit 7 by the drawing data creating unit 2.

When a place of departure and a destination are set by the user via a not-shown input unit, the route searching unit 3 searches for a route leading from the set place of departure to the set destination, and creates route data showing the route which is the search results. For example, map data including information defining nodes showing points on roads, such as break points approximating the roads with a set of straight line segments, and intersections, and information defining links each showing the path length of a road connecting between two points and the attributes of the road are registered into the map DB 6.

On the basis of the coordinates of the place of departure and those of the destination which are set by the user, the route searching unit 3 dynamically searches for the nodes and the links on the route connecting between the place of departure and the destination from the map DB6, and registers them into the route data storage unit 5 as the route data about the route leading from the place of departure to the destination. Thus, the route data registered into the route data storage unit 5 are expressed as a set of links (a sequence of links) connecting between the place of departure and the destination and created regardless of the parcels.

The drawing processing unit 4 acquires the drawing data about the drawing area specified by the drawing command outputted from the drawing control unit 1 from the drawing data storage unit 7, and draws a map to be displayed on the display screen of the not-shown display unit by using the acquired drawing data. The drawing process by the drawing processing unit 4 is carried out on a per-parcel basis.

The route data storage unit 5 stores the route data expressed as a set of links leading from the place of departure to the destination regardless of the parcels of the map data. That is, the route data stored in the route data storage unit 5 do not have information showing a correspondence with the parcels. The map DB 6 is a database for storing map data divided into segments respectively corresponding to parcels, and the map drawing device can specify and read map data from the map DB by uses information showing a parcel. The drawing data storage unit 7 stores drawing data which is brought into correspondence with each parcel.

For example, by causing a computer to read a program for map drawing in accordance with the scope of the present invention, and controlling the operation of the computer, the drawing control unit 1, the drawing data creating unit 2, the route searching unit 3, and the drawing processing unit 4 can be implemented as a concrete means in which software and hardware work in cooperation with each other on the computer.

Furthermore, the route data storage unit 5, the map database (DB) 6, and the drawing data storage unit 7 can be constructed on a storage area of a hard disk drive which is mounted typically in the above-mentioned computer. As an alternative, they can be constructed on a storage unit of another computer which is different from the above-mentioned computer and which can carry out data communications with the above-mentioned computer.

Next, the operation of the map drawing device will be explained.

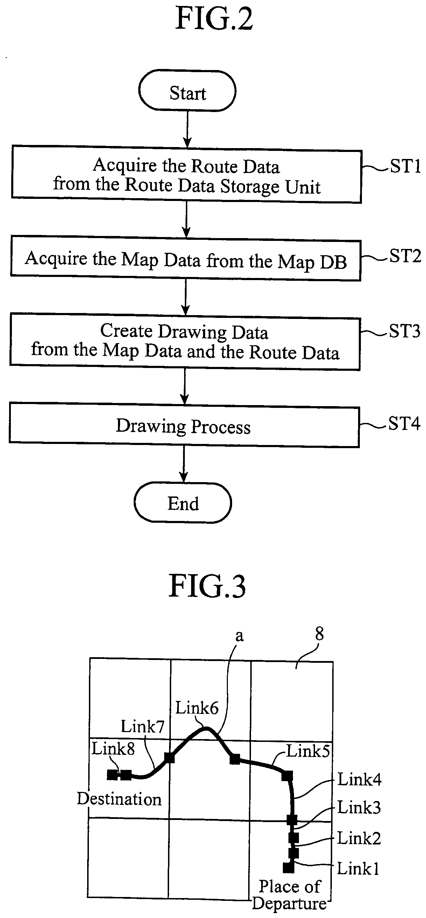

Fig. 2 is a flow chart showing a flow of an operation performed by the map drawing device shown in Fig. 1, and the details of the map drawing process will be explained with reference to this flow chart.

When receiving a drawing area change command about a map display which is inputted by the user via a not-shown input unit, the drawing control unit 1 transmits a drawing data creation command specifying a drawing area according to this drawing area change command to the drawing data creating unit 2. The drawing data creating unit 2 acquires the route data which consist of the links corresponding to the coordinates in the drawing area specified by the drawing data creation command from the route data storage unit 5 (step ST1).

Fig. 3 is a view showing an example of the route data. The route data acquired in step ST1 are created independently from the parcels 8. Therefore, there is a case in which a link, such as a link (Link 5) shown in Fig. 3, extends over a plurality of parcels 8. Furthermore, there can be a case in which a link, such as a link (Link 6), extending from a parcel passes through an adjacent parcel, and, after that, returns to the parcel again.

Next, the drawing data creating unit 2 acquires the map data corresponding to the drawing area specified by the drawing data creation command from the map DB 6 (step ST2). The map data are created statically on a per-parcel basis in advance. Furthermore, the map data (the road data) corresponding to the route data acquired from the route data storage unit 5 can be acquired by specifying the links which construct this route data, and accessing the map DB 6 to read the road data corresponding to this link data.

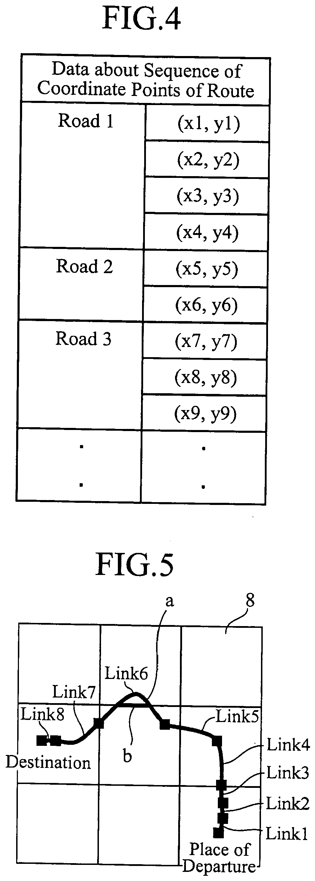

Fig. 4 is a view showing an example of the road data corresponding to the route data, and shows road data corresponding to each link which constructs the route data. In Fig. 4, each of road data Road 1, Road 2, Road 3, and ... shows one road data. Furthermore, coordinates (x, y) show the coordinates of each point included in a sequence of points which constructs road data.

As shown in Fig. 4, a plurality of road data Road 1, Road 2, Road 3, and ... can be acquired for each link which constructs the route data. Each of the plurality of road data Road 1, Road 2, Road 3, and ... holds the coordinate data about the sequence of points showing the corresponding road (refer to the coordinates (x, y) shown in Fig. 4).

Next, the drawing data creating unit 2 creates drawing data from the map data acquired in step ST2, and registers the drawing data into the drawing data storage unit 7 (step ST3) . The creation of the drawing data is carried out on a per-parcel basis. If the drawing data creating unit cannot determine whether or not a connection is established between the sequences of coordinate points on the route between two adjacent parcels when creating the drawing data for drawing the route (referred to as the route drawing data from here on) (data for link drawing) from the route data created regardless of the parcels, the following malfunction occurs.

Fig. 5 is a view for explaining the malfunction occurring when the drawing data creating unit cannot determine whether or not a connection is established between the two sequences of coordinate points on the route between two adjacent parcels, and the malfunction will be explained by taking the route data shown in Fig. 3 as an example. In a case in which a link, such as the link (Link 6) shown in Fig. 5, extending from one parcel passes through an adjacent parcel, and, after that, returns to the parcel again, if the drawing data creating unit cannot determine that a connection is established between the two sequences of coordinate points which construct the path (Link 6) between the adjacent parcels, there is a possibility that drawing data creating unit creates route drawing data showing not a route a in the adjacent parcel but a route b connecting between the coordinates of two points on the boundary between the adjacent parcels.

In order to avoid the above-mentioned malfunction, in accordance with the conventional technology, a process of checking a connection relation between sequences of coordinate points on the route is checked in detail at the time of drawing the route, and then drawing the route correctly is carried out. In contrast with this, the drawing data creating unit 2 in accordance with Embodiment 1 creates route drawing data which guarantees a connection between any two sequences of coordinate points on the route beforehand. As a result, even if the route extends over two adjacent parcels, the map drawing device can draw the route correctly and easily, and reduces the load at the time of the drawing process.

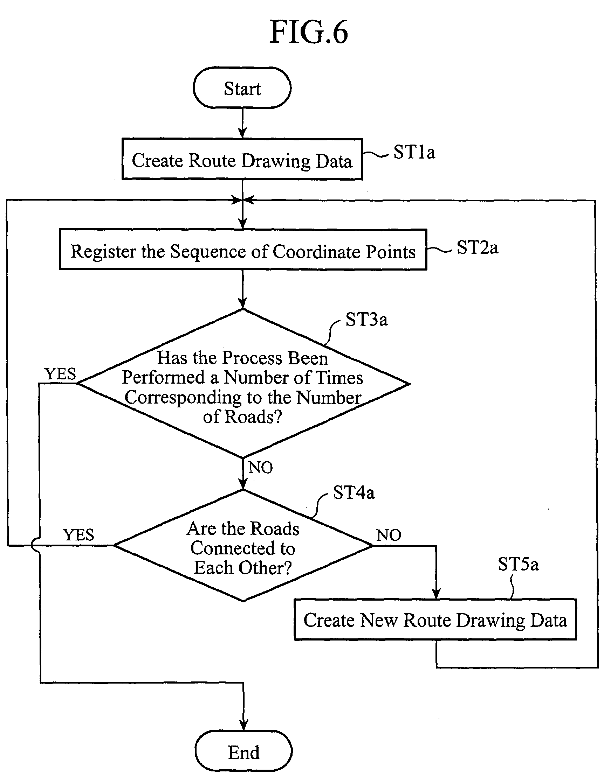

Fig. 6 is a flow chart showing a flow of the process of creating route drawing data in accordance with Embodiment 1. First, the drawing data creating unit 2 creates route drawing data for registering the sequences of coordinate points of the road data corresponding to the route data (step ST1a).

Next, on the basis of one link of the route drawing data created in step ST1a, the drawing data creating unit 2 sequentially reads the sequence of coordinate points of one road data corresponding to this link from the map DB 6, and registers the sequence of coordinate points into the route drawing data (step ST2a).

When completing the registration of the sequence of points coordinates of the one road, the drawing data creating unit 2 determines whether or not the process on all the road data corresponding to this link has been completed (step ST3a) . At this time, when there is yet-to-be-processed road data, the drawing data creating unit 2 reads the sequence of coordinate points of the next road data corresponding to this link from the map DB 6.

After that, the drawing data creating unit 2 compares the coordinates of the start point of the road data newly read from the map DB 6 with the coordinates of the end point of the road data registered into the route drawing data in step ST2a so as to determine whether or not the roads respectively shown by both of the road data are connected to each other (step ST4a) . In this case, when the coordinates of the above-mentioned start point match those of the above-mentioned end point, the drawing data creating unit 2 determines that the roads respectively shown by both of the above-mentioned road data are connected to each other, and returns to step ST2a in which it registers the sequence of coordinate points of the road data newly read into the route drawing data created in step ST1a in succession to the previous registration.

In contrast, when the coordinates of the above-mentioned start point do not match those of the above-mentioned end point and the drawing data creating unit 2 then determines that the roads respectively shown by both of the above-mentioned road data are not connected to each other, the drawing data creating unit 2 creates new route drawing data to register the sequence of coordinate points of the road data newly read into the new route drawing data (step ST5a). The drawing data creating unit 2 then returns to step ST2a in which it registers the sequence of coordinate points of the newly read road data into the route drawing data newly created in step ST5a.

After that, until the drawing data creating unit 2, in step ST4a, determines that the roads respectively shown by both of the road data corresponding to the link are not connected to each other, the drawing data creating unit 2 registers the sequence of coordinate points of the road data newly read into the route drawing data newly created in step ST5a. The drawing data creating unit 2 repeats this process a number of times which is equal to the number of roads corresponding to the link.

Furthermore, when, in step ST3a, determining that the process on all the road data has been completed, the drawing data creating unit 2 ends the creation of the route drawing data about this link, and then performs the same process on each of all the remaining links which construct the route data repeatedly.

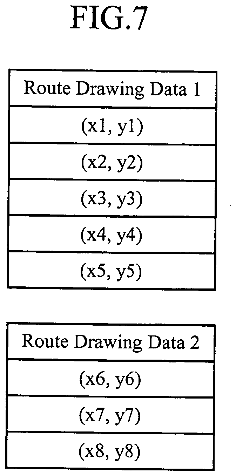

Fig. 7 is a view showing an example of the route drawing data created through the process shown in Fig. 6, and shows a case in which the road data shown in Fig. 4 are registered into the route drawing data. As shown in Fig. 7, the point coordinates (x1, y1) to (x4, y4) of the road data Road 1 and the point coordinates (x5, y5) of the road data Road 2, which are shown in Fig. 4, are registered into the route drawing data 1, and the point coordinates (x6, y6) of the road data Road 2 and the point coordinates (x7, y7) and (x8, y8) of the road data Road 3 are registered into the route drawing data 2.

By performing the above-mentioned drawing data creating process, the map drawing device creates route drawing data into which only sequences of coordinate points which are connected to one another are registered even in a case in which two road data corresponding to an identical link belong to different parcels. Furthermore, when a sequence of coordinate points which is not connected to any of the sequences of coordinate points registered into the route drawing data already created is extracted, the map drawing device registers this sequence of coordinate points into newly created route drawing data. That is, when there is a portion on the route which is not connected to the already-registered sequences of coordinate points, a plurality of route drawing data can be created for one link.

Thus, each route drawing data in accordance with the present invention is comprised of simple sequences of coordinate points which are connected to each other, and guarantees that a connection is established between the sequences of coordinate points thereof. The drawing data including the route drawing data created as mentioned above are sent from the drawing data creating unit 2 to the drawing data storage unit 7, and are then cached into the drawing data storage unit.

Returning to the explanation of Fig. 2, the drawing processing unit 4 acquires the drawing data about the drawing area specified by the drawing command outputted from the drawing control unit 1 from the drawing data storage unit 7, and draws a map on the display screen of the not-shown display unit by using the acquired drawing data (step ST4). For example, the drawing processing unit determines an appropriate color, a region, a priority, etc. for each data, for example, determines to draw each road line by connecting the sequences of coordinate points with each other with blue-colored line segments having a width of 10 pixels, and then carries out the drawing process.

When drawing the route, the drawing processing unit 4 uses the route drawing data acquired from the drawing data storage unit 7. At this time, because a connection between any two sequences of coordinate points in one route drawing data is guaranteed even if the route shown by the route drawing data extends over a plurality of parcels, the drawing processing unit 4 can draw the route by simply carrying out the drawing process in such a way as to connect all the sequences of coordinate points of each route drawing data without being aware of a connection at the boundary between any two parcels.

As mentioned above, the map drawing device in accordance with this Embodiment 1 includes: the map DB 6 for storing road data defining a sequence of points showing a road with coordinates in each of a plurality of percels into which a map is divided; the route searching unit 3 for creating route data defining a link sequence connected between two points; the drawing data creating unit 2 for, on the basis of road data about each of roads corresponding to a link of the route data, determining whether or not there is a connection between the sequences of points respectively showing the roads so as to create route drawing data defining sequences of points which are connected to each other in this link; the drawing data storage unit 7 for storing the data for route drawing; and the drawing processing unit 4 for, when drawing a map for each of the plurality of percels, drawing the roads corresponding to the link on the map on the basis of the route drawing data read from the drawing data storage unit. Because the map drawing device is configured in this way, the map drawing device creates route drawing data showing a route extending over two parcels while guaranteeing a connection between any two sequences of coordinate points in the route drawing data. Therefore, the drawing processing unit 4 can draw the route by carrying out such a simple process as the drawing process of connecting all the sequences of coordinate points of each route drawing data without being aware of a connection at the boundary between any two adjacent parcels. Thereby, the load required to carry out the drawing process can be reduced and an improvement in the drawing speed can be provided.

In above-mentioned Embodiment 1, the case in which route drawing data shown only by sequences of points which are connected to each other are created for the route data is shown, though the present invention is not limited to this case.

For example, the present invention can be applied to other data as long as the other dada are data which can be expressed as link data, such as data about jammed roads which are send via regulation information of VICS (Vehicle Information and Communication System), or the like.

### Industrial Applicability

Because the map drawing device in accordance with the present invention can reduce the load required to carry out the drawing process of drawing a route extending over a plurality of parcels and can provide an improvement in the drawing speed, the map drawing device is suitable for use in a vehicle-mounted navigation system and so on.

## Claims

1. A map drawing device comprising:
a map data storage unit for storing road data defining a sequence of points showing a road with coordinates in each of a plurality of areas into which a map is divided;
a link data creating unit for creating link data defining a link sequence connected between two points by using links each showing a path length and an attribute of a road;
a drawing data creating unit for, on a basis of road data about each of roads in said each area corresponding to a link of said link data, determining whether or not there is a connection between the sequences of points respectively showing said roads, and for, when being able to define sequences of points which are connected to each other in this link, creating data for link drawing, otherwise, creating data for link drawing different from said data for link drawing on a basis of road data about roads in each area different from said each area, the road data corresponding to the road data about each of the roads in said each area;
a drawing data storage unit for storing said data for link drawing; and
a drawing processing unit for, when drawing a map for each of said plurality of areas, drawing the roads corresponding to said link on the map on a basis of the data for link drawing read from said drawing data storage unit.

## Patentansprüche

1. Eine Kartenzeichnungsvorrichtung umfassend:
eine Kartendatenspeichereinheit zum Speichern von Straßendaten definierend eine Folge von Punkten zeigend eine Straße mit Koordinaten in jedem einer Mehrzahl von Bereichen, in die eine Karte geteilt ist;
eine Verbindungsdatenerzeugungseinheit zum Erzeugen von Verbindungsdaten definierend eine Verbindungsfolge verbunden zwischen zwei Punkten unter Verwendung von Verbindungen, von denen jede eine Pfadlänge und ein Attribut einer Straße zeigt;
eine Zeichnungsdatenerzeugungseinheit um, auf einer Basis von Straßendaten über jede von Straßen in besagtem jeden Bereich entsprechend einer Verbindung von besagten Verbindungsdaten, zu bestimmen, ob oder ob nicht es eine Verbindung gibt zwischen den Folgen von Punkten jeweils zeigend besagte Straßen, und, wenn Folgen von Punkten, die miteinander in dieser Verbindung verbunden sind, definiert werden können, Daten für eine Verbindungszeichnung zu erzeugen, andernfalls, Daten zu erzeugen für eine Verbindungszeichnung, die sich von besagten Daten für eine Verbindungszeichnung unterscheiden, auf einer Basis von Straßendaten über Straßen in jedem Bereich, der sich von besagtem jeden Bereich unterscheidet, wobei die Straßendaten den Straßendaten über jede von den Straßen in besagtem jeden Bereich entsprechen;
eine Zeichnungsdatenspeichereinheit zum Speichern besagter Daten für eine Verbindungszeichnung; und
eine Zeichnungsverarbeitungseinheit um, wenn eine Karte für jeden von besagter Mehrzahl von Bereichen gezeichnet wird, die Straßen entsprechend besagter Verbindung auf der Karte auf einer Basis der Daten für eine Verbindungszeichnung, die aus besagter Zeichnungsdatenspeichereinheit gelesen werden, zu zeichnen.

## Revendications

1. Dispositif de traçage de carte comprenant :
une unité de stockage de données de carte destinée à stocker des données de route qui définissent une série de points formant une route avec des coordonnées de chacune d'une pluralité de zones selon divisant une carte ;
une unité de création de données de liaison, destinée à créer des données de liaisons qui définissent une série de liaisons connectées entre deux points en utilisant des liaisons qui forment chacune une longueur de trajet et la caractéristique d'une route ;
une unité de création de données de traçage destinée à déterminer, sur la base des données de route relatives à chacune des routes de chaque ladite zone correspondant à une liaison desdites données de liaison, s'il existe ou non une connexion entre les séries de points qui forment de manière respective lesdites routes, et à créer, quand il est possible de définir des séquences de points connectés les uns aux autres dans cette liaison, des données de traçage de liaison, ou sinon, à créer des données de traçage de liaison différentes desdites données de traçage de liaison, sur la base des données de route relatives aux routes de chaque zone différente de chacune desdites zones, les données de route correspondant aux données de route relatives à chacune des routes de chaque ladite zone ;
une unité de stockage de données de traçage destinée à stocker lesdites données de traçage de liaison ; et
une unité de traitement de traçage destinée à tracer, lors du traçage d'une carte de chacune de ladite pluralité de zones, les routes correspondant à ladite liaison sur la carte, sur la base des données de traçage de liaison lues sur ladite unité de stockage de données de traçage.
